# EUROPÄISCHE PATENTSCHRIFT

(11) **EP 2 209 838 B1**
(45) Veröffentlichungstag und Bekanntmachung des Hinweises auf die Patenterteilung: **23.09.2015**
(21) Anmeldenummer: 08846890.5
(22) Anmeldetag: 24.10.2008
(51) Int. Cl.: C08G 77/458, C08G 18/10

(54) **POLYSILOXANMODIFIZIERTE POLYISOCYANATE**
POLYSILOXANE MODIFIED POLYISOCYANATES
POLYISOCYANATE MODIFIÉ PAR POLYSILOXANE

(30) Priorität: 08.11.2007 EP 07021691
(43) Veröffentlichungstag der Anmeldung: 28.07.2010
(73) Patentinhaber: Bayer Intellectual Property GmbH, 40789 Monheim (DE)
(72) Erfinder: NENNEMANN, Arno, 51469 Bergisch Gladbach (DE); MECHTEL, Markus, 51467 Bergisch Gladbach (DE); KLIMMASCH, Thomas, 51379 Leverkusen (DE); NIESTEN, Meike, 51061 Köln (DE)
(74) Vertreter: BIP Patents
(86) Internationale Anmeldenummer: PCT/EP2008/009002
(87) Internationale Veröffentlichungsnummer: WO 2009/059694

(56) Entgegenhaltungen:
- WO-A-2007/025670
- WO-A-2007/025671
- US-A1- 2007 032 623

## Beschreibung

Die vorliegende Erfindung betrifft neuartige modifizierte Polyisocyanate enthaltend hydroxyfunktionelle Polydimethylsiloxanbausteine sowie deren Verwendung in Beschichtungsmitteln und Klebstoffen.

US20070032623 beschreibt Polyisocyanatmischungen, welche durch Umsetzung von Polyisocyanaten mit Siloxanen kohlenstoffgebundene Hydroxylgruppen aufweisen. Diese eignen sich als Vernetzer zur Herstellung von Beschichtungen mit niedriger Oberflächenspannung.

Aus WO2007025671 sind Zusammensetzungen bekannt, welche spezielle OH-gruppenfunktionelle Polydimethylsiloxane sowie Polyole oder Polyamine und Polyisocyanate enthalten. Je nach Applikationstechnik eignen sich diese jedoch nicht zur Herstellung von trübungsfreien Lackfilmen mit guten easy-to-clean-Eigenschaften. Eine direkte Umsetzung von Polyisocyanaten mit diesen speziellen Siloxanen und deren Einsatz als Polyisocyanatvernetzer wird ferner nicht beschrieben.

Überraschend wurde nun gefunden, dass ausgehend von WO2007025671 durch Umsetzung von solchen OH-funktionellen Polydimethylsiloxanen mit Polyisocyanaten vergelungsfreie polysiloxanhaltige Polyisocyanate hergestellt werden konnten, die im Beschichtungsprozeß mit Polyhydroxyverbindungen dann eine homogenere Filmbildung sowie verbesserte anwendungstechnische Eigenschaften im Vergleich zur Formulierung über das Polyol zeigen.

Gegenstand der vorliegenden Erfindung ist daher ein Verfahren zur Herstellung siloxanmodifizierter Polyisocyanate, bei dem
A) Polyisocyanate mit
B) hydroxylgruppenhaltigen Siloxanen mit zahlenmittleren Molekulargewichten von 200 bis 3000 g/mol und einer mittleren OH-Funktionalität von größer oder gleich 1,8 gemäß Formel (I) 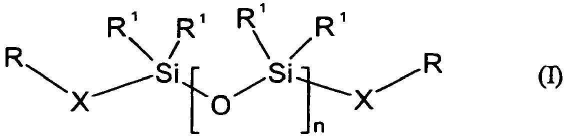 in welcher
   - X: ein aliphatischer, gegebenenfalls verzweigter C₁- bis C₁₀-Rest, bevorzugt Methyl-, Ethyl-, n-Propyl-, iso-Propyl, n-Butyl-, iso-Butyl-, tert.-Butylrest, besonders bevorzugt Methylrest oder
   Si --[-[O-CH₂-CHZ]ₙ-O-] Einheit mit Z = H oder Methyl, bevorzugt H und n = 1-12, bevorzugt 1 bis 5
   oder ganz besonders bevorzugt
   eine [-CH₂-O-(CH₂)ᵣ]- Si Einheit mit r = 1 bis 4, bevorzugt mit r = 3 ist,
   - R: ein hydroxyfunktioneller Carbonsäureester der Formel 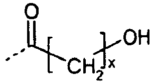 wobei x = 3 bis 5, bevorzugt 5 ist,
   oder bevorzugt eine -CH(OH)Y Gruppe ist, in welcher
   Y eine -CH₂-N(R²R³) Gruppe ist, wobei
   R² ein H,
   ein Methyl-, Ethyl-, n-Propyl-, iso-Propyl-, Cyclohexylrest, ein 2-Hydroxyethyl-, 2-Hydroxypropyl-, 3-Hydroxypropylrest sein kann und
   R³ ein 2-Hydroxyethyl-, 2-Hydroxypropyl-, 3-Hydroxypropylrest sein kann,
   - R¹: gleich oder verschieden sein kann und Wasserstoff oder ein gegebenenfalls heteroatomhaltiger C₁- bis C₁₀-Kohlenwasserstoffrest ist und
   - n: 1 bis 40 ist
C) gegebenenfalls Blockierungsmitteln
umgesetzt werden.

Ebenfalls ein Gegenstand der Erfindung sind Polyurethansysteme enthaltend solche siloxanmodifizierten Polyisocyanate und wenigstens ein Polyol oder Polyamin.

In A) können grundsätzlich alle dem Fachmann an sich bekannten NCO-funktionellen Verbindungen mit mehr als einer NCO-Gruppe pro Molekül eingesetzt werden. Diese weisen bevorzugt NCO-Funktionalitäten von 2,3 bis 4,5, Gehalte an NCO-Gruppen von 11,0 bis 24,0 Gew.-% und Gehalte an monomeren Diisocyanaten von bevorzugt weniger als 1 Gew.-%, besonders bevorzugt kleiner 0,5 Gew.-% auf.

Solche Polyisocyanate sind durch Modifizierung einfacher aliphatischer, cycloaliphatischer, araliphatischer und/oder aromatischer Diisocyanate zugänglich und können Uretdion-, Isocyanurat-, Allophanat-, Biuret-, Iminooxadiazindion- und/oder Oxadiazintrionstrukturen aufweisen. Außerdem können solche Polyisocyanate als NCO-gruppenhaltige Prepolymere eingesetzt werden. Derartige Polyisocyanate sind beispielsweise in Laas et al. (1994), J. prakt. Chem. 336, 185-200 oder in Bock (1999), Polyurethane für Lacke und Beschichtungen, Vincentz Verlag, Hannover, S. 21-27, beschrieben.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2- Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato- 3,3,5-trimethyl-5-isocyanatomethylcyclohexan (Isophorondiisocyanat, IPDI), 4,4'- Diisocyanato-dicyclohexylmethan, 1-Isocyanato-1-methyl-4(3)isocyanatomethylcyclohexan, Bis-(isocyanatomethyl)-norboman, 1,3- und 1,4-Bis-(1-isocyanato-1- methyl-ethyl)-benzol (TMXDI), 2,4- und 2,6-Diisocyanatotoluol (TDI), 2,4'- und 4,4'- Diisocyanatodiphenylmethan (MDI), 1,5-Diisocyanatonaphthalin oder beliebige Gemische solcher Diisocyanate.

Bevorzugt werden in A) Polyisocyanate der vorstehend genannten Art auf Basis von IPDI, MDI, TDI, HDI oder deren Gemischen eingesetzt. Besonders bevorzugt werden aliphatische Polyisocyanate auf Basis von HDI und IPDI eingesetzt.

Bevorzugt weisen die hydroxylgruppenhaltigen Siloxane B) der allgemeinen Formel (I) zahlenmittlere Molekulargewichte von 250 bis 2250 g/mol, besonders bevorzugt von 350 bis 1500 g/mol auf.

Die hydroxylgruppenhaltigen Siloxane B) der allgemeinen Formel (I) sind erhältlich, indem entsprechende epoxyfunktionelle Polyorganosiloxane mit hydroxyalkylfunktionellen Aminen, bevorzugt in einem stöchiometrischen Verhältnis von Epoxygruppe zu Aminofunktion umgesetzt werden.

Die dazu eingesetzten epoxyfunktionellen Siloxane weisen bevorzugt 1 bis 4, besonders bevorzugt 2 Epoxygruppen pro Molekül auf. Ferner haben sie zahlenmittlere Molekulargewichte von 150 bis 2000 g/mol, bevorzugt von 250 bis 1500 g/mol, ganz besonders bevorzugt von 250 bis 1250 g/mol.

Bevorzugte epoxyfunktionelle Siloxane sind α,ω-Epoxysiloxane entsprechend der Formel (II), 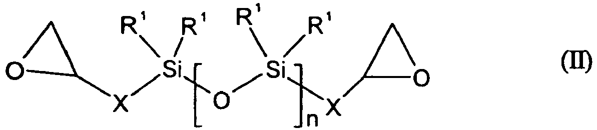 in welcher
- X: ein aliphatischer, gegebenenfalls verzweigter C₁- bis C₁₀-Rest, bevorzugt Methyl-, Ethyl-, n-Propyl-, iso-Propyl, n-Butyl-, iso-Butyl-, tert.-Butylrest, besonders bevorzugt Methylrest oder
eine [-CH₂-O-(CH₂)ᵣ]-- Si Einheit mit r = 1 bis 4, bevorzugt mit r = 3 ist,
- R¹: gleich oder verschieden sein kann und Wasserstoff oder ein gegebenenfalls heteroatomhaltiger C₁- bis C₁₀-Kohlenwasserstoffrest ist und
- n: 1 bis 40 ist.

R¹ in den Formeln (I) und (II) ist bevorzugt Phenyl-, Alkyl-, Aralkyl-, Fluoralkyl-, Alkylethylencopropylenoxidgruppen oder Wasserstoff, wobei Phenyl- oder Methylgruppen besonders bevorzugt sind. Ganz besonders bevorzugt ist R¹ eine Methylgruppe.

Geeignete Verbindungen entsprechend Formel (II) sind beispielsweise solche der Formeln IIa) und IIb): 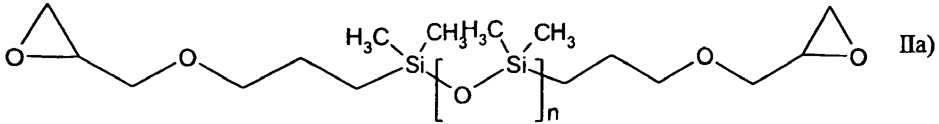 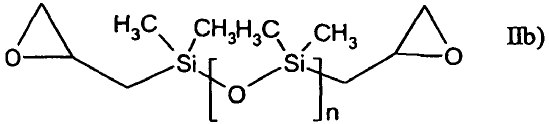 in welchen
- n: eine ganze Zahl von 4 bis 12, bevorzugt von 6 bis 9 ist.

Beispiele für kommerziell erhältliche Produkte dieser Reihe sind beispielsweise CoatOsil^{®} 2810 (MomentIIIe Performance Materials, Leverkusen, Deutschland) oder Tegomer^{®} E-Si2330 (Tego Chemie Service GmbH, Essen, Deutschland).

Geeignete hydroxyalklylfunktionelle Amine entsprechen der allgemeinen Formel (III) 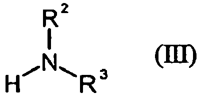 in welcher
- R²: ein H,
ein Methyl-, Ethyl-, n-Propyl-, iso-Propyl-, Cyclohexylrest, ein 2-Hydroxyethyl-, 2-Hydroxypropyl-, 3-Hydroxypropylrest sein kann und
- R³: ein 2-Hydroxyethyl-, 2-Hydroxypropyl-, 3-Hydroxypropylrest sein kann,

Bevorzugte Hydroxyalkylamine sind Ethanolamin, Propanolamin, Diethanolamin, Diisopropanolamin, Methylethanolamin, Ethylethanolamin, Propylethanolamin und Cyclohexyl-ethanolamin. Besonders bevorzugt sind Diethanolamin, Diisopropanolamin oder Cyclohexylethanolamin. Ganz besonders bevorzugt ist Diethanolamin.

Zur Herstellung der Komponente B) wird das epoxyfunktionelle Siloxan der allgemeinen Formel (II) gegebenenfalls in einem Lösemittel vorgelegt und dann mit der erforderlichen Menge des Hydroxyalkylamins (III)] oder einer Mischung mehrerer Hydroxyalkylamine (III) umgesetzt. Die Reaktionstemperatur beträgt typischerweise 20 bis 150 °C und wird solange geführt, bis keine freien Epoxygruppen mehr nachweisbar sind.

Besonders bevorzugt werden hydroxyalkylfunktionelle Siloxane B) der Formel (I) eingesetzt, die durch oben aufgeführte Umsetzung epoxyfunktioneller Polyorganosiloxane mit Hydroxyalklyaminen erhalten wurden.

Besonders bevorzugte Polyorganosiloxane B) sind beispielsweise solche der Formeln Ia) bis Ih): 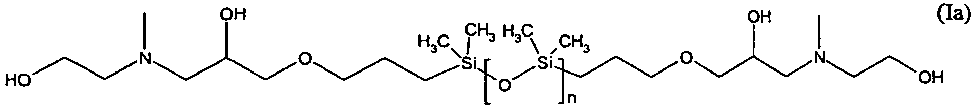 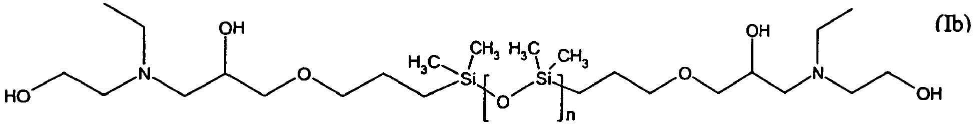 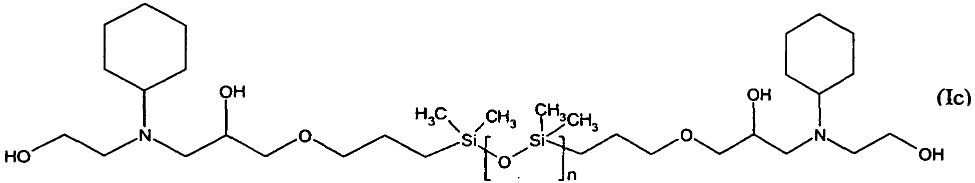 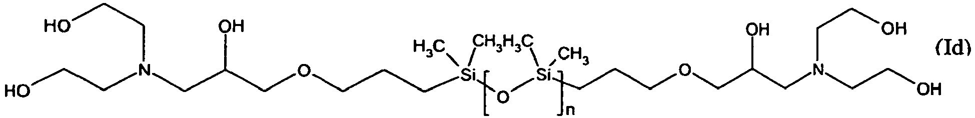 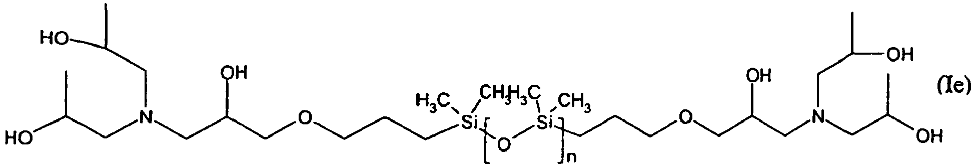 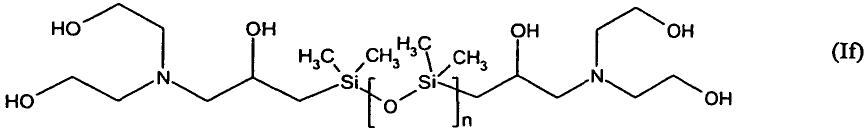 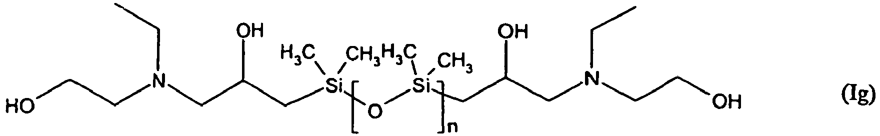 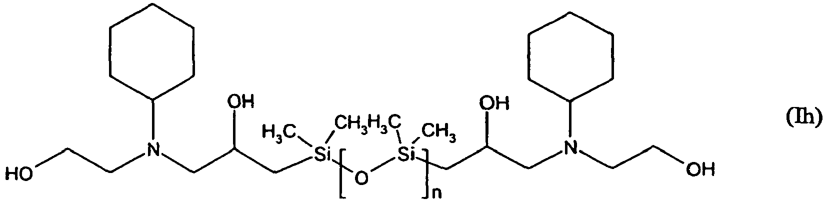 wobei n = 4 bis 12, bevorzugt 6 bis 9 ist.

Ebenfalls geeignet als Komponente B) sind beispielsweise hydroxyalkylfunktionelle Siloxane (α, ω-carbinole) entsprechend Formel (IV), 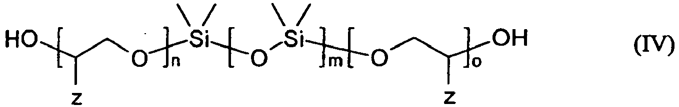 in welcher
- m: 5 bis 15,
- Z: H oder Methyl, bevorzugt H und
- n, ₀: 1 bis 12, bevorzugt 1 bis 5 ist.

Hydroxyalkylfunktionelle Siloxane (α, ω-Carbinole) der Formel (IV) haben bevorzugt zahlenmittlere Molekulargewichte von 250 bis 2250 g/mol, besonders bevorzugt von 250 bis 1500 g/mol, ganz besonders bevorzugt von 250 bis 1250 g/mol. Beispiele für kommerziell erhältliche hydroxyalkylfunktionelle Siloxane des genannten Typs sind Baysilone® OF-OH 502 3 und 6%ig (Fa. GE-Bayer Silicones, Leverkusen, Deutschland).

Ein weiterer Weg zur Herstellung geeigneter hydroxyfunktioneller Polyorganosiloxane entsprechend der Komponente B) ist die Umsetzung der vorgenannten hydroxyalkylfunktionellen Siloxaue vom u, ω-Carbinol-Typ der Formel (IV) mit cyclischen Lactonen. Geeignete cyclische Lactone sind beispielsweise ε-Caprolacton, γ-Butyrolacton oder Valerolacton.

Dies geschieht in einem Verhältnis von OH-Gruppen zu Lactonfunktionen von 1:2 bis 2:1, bevorzugt in einem stöchiometrischen Verhältnis von OH-Gruppen zu Lactonfunktionen. Die so erhaltenen hydroxyalkylfunktionellen Siloxane B) sind bevorzugt. Beispielhaft für eine solche Verbindung sind Polyorganosiloxane B) der allgemeinen Formel (V) 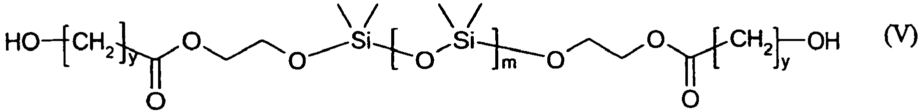 in welcher
m = 5 bis 15 und
y = 2 bis 5, bevorzugt 5 sein kann.

Bevorzugt ist R in Formel (I) ein hydroxyfunktioneller Carbonsäureester der Formel 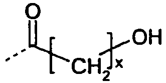 wobei x = 3 bis 5, bevorzugt 5 ist,
oder eine hydroxyalkylfunktionelle Aminogruppe der Formel 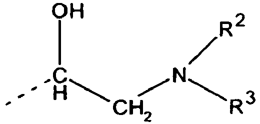 wobei
- R²: ein aliphatischer linearer, verzweigter oder cyclischer Hydroxyalkylrest
- R³: Wasserstoff oder entsprechend der Definition des Restes R² ist.

Besonders bevorzugt ist R in Formel (I) eine hydroxyalkylfunktionelle Aminogruppe der vorgenannten Art.

R¹ in den Formeln (I) und (II) ist Bevorzugt Phenyl-, Alkyl-, Aralkyl-, Fluoralkyl-, Alkyiethylencopropylenoxidgruppen oder Wasserstoff, wobei Phenyl und Methyl besonders bevorzugt sind. Es ist dabei unerheblich, ob es sich bei den Resten R1 um gleiche oder verschiedene Gruppen handelt.

Ganz besonders bevorzugt ist R1 eine Methylgruppe, so dass es sich um reine Dimethylsilyleinheiten handelt.

Bevorzugt haben die wie vorstehend beschrieben erhältlichen hydroxylgruppenhaltigen Siloxane der Komponente B) zahlenmittlere Molekulargewichte von 250 bis 2250 g/mol, besonders bevorzugt 250 bis 1500 g/mol.

Bei der Modifizierung beträgt das Verhältnis von freien NCO-Gruppen des zu modifizierenden Isocyanats zu den NCO-reaktIIIen OH-Gruppen des hydroxylgruppenhaltigen Siloxans der Formel (I) bevorzugt 1 : 0,001 bis 1 : 0,4, besonders bevorzugt 1 : 0,01 bis 1 : 0,2.

Im Anschluss an die Siloxan-Modifizierung können die freien NCO-Gruppen der so modifizierten Polyisocyanate noch weitergehend modifiziert werden. Dies kann beispielsweise eine partielle oder vollständige Blockierung der freien NCO-Gruppen mit dem Fachmann an sich bekannten Blockierungsmitteln sein (zur Blockierung von Isocyanatgruppen siehe DE-A 10226927, EP-A 0 576 952, EP-A 0 566 953, EP-A 0 159 117, US-A 4 482 721, WO 97/12924 oder EP-A 0 744 423). Beispielsweise zu nennen sind Butanonoxim, ε-caprolactam, Methyl-ethyl-ketoxim, Malonsäureester, sekundäre Amine sowie Triazol- und PyrazolderIIIate.

Eine Blockierung der NCO-Gruppen hat den Vorteil, dass die darauf basierenden siloxanmodifizierten Polyisocyanate eine tendenziell bessere Stabilität gegen Vergelung aufweisen als analoge Produkte, welche noch freie NCO-Gruppen besitzen. Dies trifft insbesondere bei Reaktionsverhältnissen NCO : OH von 1 : 0,1 bis 1 : 0,4 zu.

Die Reaktion von hydroxyfunktionellem Polydimethylsiloxan und Polyisocyanat erfolgt bei 0-100 °C, bevorzugt bei 10 - 90 °C, besonders bevorzugt bei 15 - 80 °C. Gegebenenfalls können gängige Katalysatoren eingesetzt werden, die die Reaktion R-OH mit NCO katalysieren.

Im erfindungsgemäßen Verfahren können prinzipiell zu jedem Zeitpunkt die dem Fachmann an sich bekannten gegenüber NCO-Gruppen inerten Lösemittel zugesetzt werden. Beispielsweise sind dies Lösungsmittel wie Butylacetat, 1-Methoxy-2-propylacetat, Ethylacetat, Toluol, Xylol, Solventnaphta sowie deren Mischungen.

Polyurethansysteme die solche wie vorstehend beschrieben modifizierten Polyisocyanate enthalten können je nach dem, ob die NCO-Gruppen blockiert sind, als 1- oder 2-Komponenten-PUR-Systeme formuliert werden.

Neben den erfindungsgemäßen polysiloxanmodifizierten Polyisocyanaten enthalten die Polyurethansysteme der vorliegenden Erfindung Polyhydroxy- und/oder Polyaminverbindungen zur Vernetzung. Daneben können noch weitere von den erfindungsgemäßen Polyisocyanaten verschiedene Polyisocyanate sowie Hilfs- und Zusatzstoffe enthalten sein.

Geeignete Polyhydroxylverbindungen sind beispielsweise tri- und/oder tetrafiuiktionelle Alkohole und/oder die in der Beschichtungstechnologie an sich üblichen Polyetherpolyole, Polyesterpolyole und/oder Polyacrylatpolyole.

Ferner können zur Vernetzung auch Polyurethane oder Polyharnstoffe, die aufgrund der in den Urethan- bzw. Harnstoffgruppen vorliegenden aktIIIen Wasserstoffatome mit Polyisocyanaten vernetzbar sind, eingesetzt werden.

Ebenfalls möglich ist der Einsatz von Polyaminen, deren Aminogruppen blockiert sein können, wie Polyketimine, Polyaldimine oder Oxazolane.

Bevorzugt werden zur Vernetzung der erfindungsgemäßen Polyisocyanate Polyacrylatpolyole und Polyesterpolyole eingesetzt.

Als Hilfs- und Zusatzstoffe können Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid oder beliebige Gemische solcher Lösungsmittel verwendet werden. Bevorzugte Lösungsmittel sind Butylacetat, 2-Ethylacetat und Diacetonalkohol.

Ferner können als Hilfs- und Zusatzstoffe anorganische oder organische Pigmente, Lichtschutzmittel, LackadditIIIe, wie Dispergier-, Verlauf-, Verdickungs-, Entschäumungs- und andere Hilfsmittel, Haftmittel, Fungizide, Bakterizide, Stabilisatoren oder Inhibitoren und Katalysatoren enthalten sein.

Die Applikation des erfindungsgemäßen Polyurethansysteme auf Substrate erfolgt nach den in der Beschichtungstechnologie üblichen Applikationsverfahren, wie z. B. Spritzen, Fluten, Tauchen, Schleudern oder Rakeln.

Die erfindungsgemäßen polysiloxamnodifizierten Polyisocyanate sowie die darauf basierenden Polyurethansysteme eignen sich für die Herstellung von Polyurethanklebstoffen, Polyurethanlacken und Polyurethanbeschichtungen.

### Beispiele

Desmophen^{®} A 870 Polyacrylatpolyol, 70 % in Butylacetat, OH-Zahl 97, OH-Gehalt 2,95 %, Viskosität bei 23 °C ca. 3500 mPas, Handelsprodukt der BayerMaterialScience AG, Leverkusen, DE

Desmodur^{®} N 3300: Hexamethylendiisocyanat Trimerisat; NCO-Gehalt 21,8 +/- 0,3 Gew.-%, Viskosität bei 23°C ca. 3000 mPas, Bayer MaterialScience AG, Leverkusen, DE

Desmodur^{®} VP LS 2253: 3,5-Dimethylpyrazol-blockiertes Polyisocyanat (Trimerisat) auf Basis HDI; 75 % in SN 100/MPA (17:8), Viskosität bei 23°C ca. 3600 mPas, blockierter NCO-Gehalt 10,5 %, EquIIIalentgewicht 400, Bayer MaterialScience AG, Leverkusen, DE

Baysilone OF/OH 502 6%ig: Organofunktionelles Polydimethylsiloxan, OH-Gehalt 5,5 bis 6,5 %, GE-Bayer Silicones (MomentIIIe), Leverkusen, DE.

Coatosil^{®} 2810: Epoxy-modifizierte Siliconflüssigkeit, Epoxid-Gehalt 11,4Gew.%, MomentIIIe Performance Materials, Leverkusen, DE

Die Bestimmung der Hydroxylzahl (OH-Zahl) erfolgte gemäß DIN 53240-2.

Die Viskositätsbestimmung erfolgte mittels Rotationsviskosimeter "RotoVisco 1" der Fa. Haake, Deutschland gemäß DIN EN ISO 3219.

Die Bestimmung der Säurezahl erfolgte gemäß DIN EN ISO 2114.

Die Farbzahlbestimmung (APHA) erfolgte gemäß DIN EN 1557.

Die Bestimmung des NCO-Gehaltes erfolgte gemäß DIN EN ISO 11909.

Pendeldämpfung (König) nach DIN EN ISO 1522 "Pendeldämpfungsprüfung"

Kratzfestigkeit Laborwaschanlage (Nassverkratzung) nach DIN EN ISO 20566 "Beschichtungsstoffe - Prüfung der Kratzfestigkeit eines Beschichtungssystems mit einer Laborwaschanlage"

### Bestimmung der Lösemittelbeständigkeit

Mit dieser Prüfung wurde die Widerstandsfähigkeit eines ausgehärteten Lackfilmes gegen verschiedene Lösemittel festgestellt. Hierzu lässt man die Lösemittel für eine bestimmte Zeit auf die Lackoberfläche einwirken. Anschließend wird visuell und durch Abtasten mit der Hand beurteilt, ob und welche Veränderungen auf der Prüffläche aufgetreten sind. Der Lackfilm befindet sich in der Regel auf einer Glasplatte, andere Substrate sind ebenfalls möglich. Der Reagenzglasständer mit den Lösemittel Xylol, 1-Methoxypropylacetat-2, Ethylacetat und Aceton (s.u.) wird so auf die Lackoberfläche aufgesetzt, dass die Öffnungen der Reagenzgläser mit den Wattepfropfen auf dem Film aufliegen. Wichtig ist die dadurch entstehende Benetzung der Lackoberfläche durch das Lösemittel. Nach der festgelegten Einwirkzeit der Lösemittel von 1 Minute und 5 Minuten wird der Reagenzglasständer von der Lackoberfläche entfernt. Anschließend werden die Lösemittelreste sofort mittels eines saugfähigen Papiers oder Textilgewebe entfernt. Man mustert nun sofort die Prüffläche nach behutsamem Kratzen mit dem Fingernagel visuell auf Veränderungen ab. Folgende Stufen werden unterschieden:
0 = unverändert
1 = Spur verändert nur sichtbare Veränderung
2 = gering verändert mit Fingernagel spürbare Erweichung feststellbar
3 = merklich verändert mit dem Fingernagel starke Erweichung feststellbar
4 = stark verändert mit dem Fingernagel bis zum Untergrund
5 = zerstört ohne Fremdeinwirkung Lackoberfläche zerstört

Die gefundenen Bewertungsstufen für die oben angegebenen Lösemittel werden in der folgenden Reihenfolge dokumentiert:
Beispiel 0000 (keine Veränderung)
Beispiel 0001 (sichtbare Veränderung nur bei Aceton)

Dabei beschreibt die Zahlenreihenfolge die Reihenfolger der ausgetesteten Lösungsmittel (Xylol, Methoxypropylacetat, Ethylacetat, Aceton)

### Bestimmung der Kratzfestigkeit mittels Hammertest (Trockenverkratzung)

Die Verkratzung wird mit einem Hammer (Gewicht: 800 g ohne Stiel) durchgeführt., an dessen flacher Seite Stahlwolle oder Polishing Paper befestigt werden. Dazu wird der Hammer vorsichtig im rechten Winkel auf die beschichtete Oberfläche aufgesetzt und ohne zu verkanten und ohne zusätzliche Körperkraft in einer Spur über die Beschichtung geführt. Es werden 10 Doppelhübe durchgeführt. Nach der Belastung mit dem Verkratzungsmedium wird die Prüffläche mit einem weichen Tuch gereinigt und anschließend der Glanz nach DIN EN ISO 2813 quer zur Verkratzungsrichtung gemessen. Es dürfen nur homogene Bereiche vermessen werden.

### Beispiel la: hydroxyfunktionelles Polydimethylsiloxau

Entsprechend WO 2007025670 wurden 770 g des epoxyfunktionellen Polydimethylsiloxans Coatosil^{®} 2810 der Formel 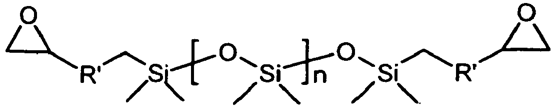 vorgelegt, auf 80 °C vorgeheizt und mit 231 g Diethanolamin (Valverhältnis Epoxid / Amin 1:1) versetzt. Diese Mischung wurde anschließend 2 Stunden bei 100°C gerührt. Das Produkt hatte einen Epoxidgehalt < 0,01 %, eine OH-Zahl von ca. 365 mg KOH/g (11,1 %) und eine Viskosität bei 23°C von ca. 2900 mPas.

### Beispiel 1b - 1c

Analog zu Beispiel 2a wurde die Umsetzung des Bisepoxids mit verschiedenen Aminen durchgeführt. Die Epoxidgehalte lagen nach Abklingen der Reaktion < 0,01 %. Teilweise wurde die Synthese in Gegenwart von Butylacetat durchgeführt.

| **Beispiel** | **Amin** | **Butylacetat** [%] | **OH-Zahl [mg KOH/g]** |
|---|---|---|---|
| 1a | Diethanolamin | - | 365 |
| 1b | 2-Ethylaminoethanol | - | 249 |
| 1c | Cyclohexylaminoethanol | 25 | 116 |

### Beispiel 1d

438 g (2 val) des PDMS-Bishydroxids Tegomer H-Si2111 (OH-Gehalt 3,9 %, Molmasse 876 g/mol; Degussa AG, Essen, DE) wurden mit 57 g Caprolacton (1 val) und 0,05 % w/w DBTL gemischt und bei 150 °C 6 h gerührt. Es wurde ein transparentes Produkt mit einer OH-Zahl von 113 mg KOH/g erhalten.

### Beispiel 2a: erfindungsgemäßes, polysiloxanmodifiziertes Polyisocyanat

In einer Standard-Rührapparatur wurden 321,1 g (1 val) Desmodur^{®} N3300 in 250 g Butylacetat bei 80 °C vorgelegt und 2 1/h Stickstoff übergeleitet. Anschließend wurde 51,28 g (0,2 val) des Siloxanblockcopolyols aus Beispiel 1 bei 80 °C zugegeben und die Temperatur 4 h gehalten. Der theoretisch erwartete NCO-Gehaltes wurde titrimetrisch überprüft und dann auf Raumtemperatur abgekühlt sowie 250 g Butylacetat hinzugefügt. Nach Überprüfung des theoretischen NCO-Gehaltes wurde auf RT abgekühlt und in ca. 15 min 127,59 g (0,8 val) des Blockierungsmittels 3,5-Dimethylpyrrazol (DMP) hinzugegeben unter Regelung der Temperatur auf maximal 40 °C. Die Temperatur wurde solange bei 40 °C gehalten, bis der NCO-peak im IR-Spektrometer verschwunden war.

Man erhielt ein klares blockiertes Polyisocyanat mit folgenden Kennzahlen: Feststoffgehalt 49,6 Gew.-% sowie 6,5 % blockierter NCO-Gehalt bezogen auf DMP. Die Lagerstabilität bei Raumtemperatur lag bei > 3 Monaten.

### Beispiel 2b: erfindungsgemäßes, polysiloxanmodifiziertes Polyisocyanat

In einer Standard-Rührapparatur wurden 492,1 g (1 val) Desmodur^{®} N3300 in 250 g Butylacetat bei 80 °C vorgelegt und 2 1/h Stickstoff übergeleitet. Anschließend wurde 7,86 g (0,02 val) des Siloxanblockcopolyols aus Beispiel 2a bei 80 °C zugegeben und die Temperatur 4 h gehalten. Der theoretisch erwartete NCO-Gehaltes wurde titrimetrisch überprüft und dann auf Raumtemperatur abgekühlt sowie 250 g Butylacetat hinzugefügt.

Man erhielt ein klares polysiloxanmodifiziertes Polyisocyanat mit folgenden Kennzahlen: Feststoffgehalt 50,3 Gew.-% sowie 10,4 % NCO-Gehalt. Die Lagerstabilität bei Raumtemperatur lag bei > 3 Monaten.

### Beispiel 2c: Vergleichsbeispiel, polysiloxanmodifiziertes Polyisocyanat

In einer Standard-Rührapparatur wurden 295,8 g (1 val) Desmodur^{®} N3300 in 250 g Butylacetat bei 80 °C vorgelegt und 2 1/h Stickstoff übergeleitet. Anschließend wurde 86,6 g (0,2 val) Baysilone OF/OH 502 (OH-Gehalt 6 %) bei 80 °C zugegeben und die Temperatur 4 h gehalten. Der theoretisch erwartete NCO-Gehaltes wurde titrimetrisch überprüft und dann auf Raumtemperatur abgekühlt sowie 250 g Butylacetat hinzugefügt. Nach Überprüfung des theoretischen NCO-Gehaltes wurde auf RT abgekühlt und in ca. 15 min 117,6 g (0,8 val) des Blockierungsmittels 3,5-Dimethylpyrrazol (DMP) hinzugegeben unter Regelung der Temperatur auf maximal 40 °C. Die Temperatur wurde solange bei 40 °C gehalten, bis der NCO-peak im IR-Spektrometer verschwunden war.

Man erhielt ein klares, polysiloxanmodifiziertes, blockiertes Polyisocyanat mit folgenden Kennzahlen: Feststoffgehalt 48,6 Gew.-% sowie 6,14 % blockierter NCO-Gehalt bezogen auf DMP.

### Beispiel 3a: Vergleichsbeispiel, siloxanmodifiziertes Polyol

In einer Standard-Rührapparatur wurden zu 496,5 g Desmophen A 870BA 3,5 g des Siloxanblockcopolyols aus Beispiel 2a bei 80 °C zugegeben, bis es gut gelöst war. Man erhielt ein farbloses, lagerstabiles Polyol (> 3 Monate) mit einem OH-Gehalt von 3,1 %, einem Siloxanblockcopolyolgehalt von 1 % fest auf fest und einem Feststoffgehalt von 70,9 %.

### Beispiel 3b: Vergleichsbeispiel, siloxanmodifiziertes Polyol

In einer Standard-Rührapparatur wurden zu 482,2 g Desmophen A 870BA 17,8 g des Siloxanblockcopolyols aus Beispiel 2a bei 80 °C zugegeben, bis es gut gelöst war. Man erhielt ein farbloses, lagerstabiles Polyol (> 3 Monate) mit einem OH-Gehalt von 3,4 %, einem Siloxanblockcopolyolgehalt von 5 % fest auf fest und einem Feststoffgehalt von 71,7 %.

### Anwendungstechnische Ausprüfung der erfindungsgemäßen, siloxanmodifizierten Polyisocyanate:

Die erfindungsgemäßen Polyisocyanate aus Beispiel 2a und 2b wurden mit Desmophen^{®} A870 BA in den Verhältnissen NCO/OH von 1,0 sowie 0,1% Baysilone OL 17 (fest/BM fest. 10 %-ige Lösung in MPA), 2,0% BYK 070 (Lff./BM fest), 1,0% Tinuvin 123 (Lff./BM fest), 1,5% Tinuvin 384-2 (Lff./BM fest) und 0,5 % DBTL (fest/BM fest, 10 %-ige Lösung in MPA) als LackadditIIIe abgemischt und gut verrührt. Die Festkörper der Lacke lagen zwischen 40 und 50 % und wurden gegebenenfalls mit einem Lösemittelgemisch MPA/SN 1:1 eingestellt. Bis zur Verarbeitung wurde der Lack noch 10 min. entlüftet. Der Lack wurde dann mit einer Fließbecherpistole in 1,5 Kreuzgängen auf den vorbereiteten Untergrund appliziert (3,0-3,5 bar Druckluft, Düse: 1,4-1,5 mm Ø, Abstand Düse-Substrat: ca. 20-30 cm). Nach einer Ablüftzeit von 15 min. wurde der Lack bei 140°C für 30 min. eingebrannt. Die Trockenschichtdicke betrug jeweils 40-50 µm.

Zum Vergleich wurde ein konventionelles Lacksystem aus Desmophen^{®} A 870 und Desmodur^{®} VP LS 2253 sowie Lacksysteme enthaltend siloxanmodifizierte Polyole aus den Vergleichsbeispielen 3a und 3b formuliert und analog appliziert.

Die Ergebnisse des erfindungsgemäßen, siloxanhaltigen Polyisocyanats aus Beispiel 2a sowie des Vergleichs sind in Tabelle 1 dargestellt.

**Tabelle 1 Vergleich der lacktechnologischen Eigenschaften**

| | **16** | **8** | **10** |
|---|---|---|---|
| **Polyisocyanat** | **Desmodur VP LS 2253** | **Beispiel 2a** | **Beispiel 2c** |
| **Polyol** | **A 870 BA** | **A 870 BA** | **A 870 BA** |
| **Visuelle Beurteilung des Lackfilmes** | i.O. | i.O. | Benetzungsprobleme |
| **Pendeldämpfung** n. König [s] | 174 | 165 | 95 |
| **Lösemittelbeständigkeit** (X/MPA/EA/Ac)[Note]¹⁾ nach 5 min. | 3344 | 2244 | 4455 |
| **Kratzfestigkeit (*Hammertest*** + ***Stahlwolle)*** | | | |
| Ausgangsglanz 20° | 88,0 | 87,1 | 86,7 |
| RelatIIIer Restglanz n. Reflow, 2 h 60°C [%] | 45,8 | 83,1 | 66,4 |

Während die erfindungsgemäßen, polysiloxanmodifizierten Polyisocyanate aus Beispiel 2a und 2b Filme mit gutem Verlauf bildeten, zeigten mit herkömmlichen OH-haltigen Polysiloxanbausteinen modifizierte Polyisocyanate starke Benetzungsprobleme. Des weiteren zeigte das erfindungsgemäße polysiloxanmodifizierte Polyisocyanat eine verbesserte Lösemittelbeständigkeit sowie Kratzfestigkeit (relatIIIer Restglanz nach Reflow). Mit herkömmlichen Polysiloxanbausteinen modifizierte Polyisocyanate zeigten deutliche Verschlechterung der Pendelhärte sowie der Lösemittelbeständigkeit, auch gegenüber dem Standard.

### Vergleich der lacktechnologischen Eigenschaften mit WO2007025671

In Beispiel 3a und 3b wurden die höherfunktionellen hydroxyalkylfunktionellen Polydimethylsiloxane analog WO2007025671 vorab mit dem Polyol vermischt, diese dann vor der Applikation mit dem Polyisocyanat vermischt und dann versprüht und nicht gerakelt, wie in WO 2007/025671 beschrieben. Im Unterschied zu WO 2007/025671 wurden nach der Spritzapplikation Filme mit starken Benetzungsfehlem erhalten (nicht charakterisierbar), Wurde hingegen das Polysiloxanpolyol erfindungsgemäß vorher mit dem Polyisocyanat umgesetzt ("Prepolymeransatz"), so ließ sich eine vernünftige Spritzapplikation durchführen die zu verbesserten Filmeigenschaften führte (siehe Tabelle 1).

## Patentansprüche

1. Verfahren zur Herstellung siloxanmodifizierter Polyisocyanate, bei dem
A) Polyisocyanate mit
B) hydroxylgruppenhaltigen Siloxanen mit zahlenmittleren Molekulargewichten von 200 bis 3000 g/mol und einer mittleren OH-Funktionalität von größer oder gleich 1,8 gemäß Formel (I) 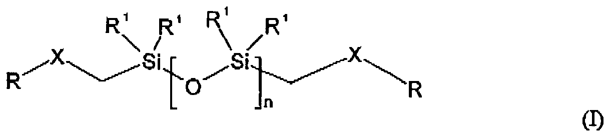
X ein aliphatischer, gegebenenfalls verzweigter, gegebenenfalls Ethergruppen enthaltender C₁ bis C₂₀-Rest,
R hydroxyfunktioneller Rest,
R¹ Wasserstoff oder ein gegebenenfalls heteroatomhaltiger C₁ bis C₂₀-Kohlenwasserstoffrest und
n 1 bis 40 ist und
C) gegebenenfalls Blockierungsmitteln
umgesetzt werden und die Umsetzung von A) mit B) in Abwesenheit von über B) hinausgehenden Verbindungen mit 2 oder mehr Hydroxylgruppen durchgerührt wird.

2. Verfahren gemäß Anspruch 1, **dadurch gekennzeichnet, dass** in A) Polyisocyanate mit Uretdion-, Isocyanurat-, Allophanat-, Biuret-, Iminooxadiazindion- und/oder Oxadiazintrionstrukturen eingesetzt werden.

3. Verfahren gemäß Anspruch 1 oder 2, **dadurch gekennzeichnet, dass** in A) Polyisocyanate auf Basis von IPDI, MDI, TDI, HDI oder deren Gemischen eingesetzt werden.

4. Verfahren gemäß einem der Ansprüche 1 bis 3, **dadurch gekennzeichnet, dass** in Formel (I) R ein hydroxyfunktioneller Carbonsäureester der Formel 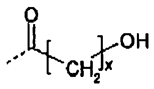 wobei x = 3 bis 5, bevorzugt 5 ist,
oder eine hydroxyalkylfunktionelle Aminogruppe der Formel 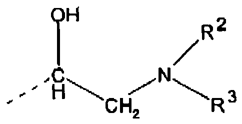 wobei
R² ein aliphatischer linearer, verzweigter oder cyclischer Hydroxyalkylrest
R³ Wasserstoff oder entsprechend der Definition des Restes R² ist.

5. Verfahren gemäß einem der Ansprüche 1 bis 4, **dadurch gekennzeichnet, dass** R¹ in Formel (I) eine Phenyl- oder Methylgruppe ist.

6. Verfahren gemäß einem der Ansprüche 1 bis 5, **dadurch gekennzeichnet, dass** das Verhältnis von freien NCO-Gruppen des zu modifizierenden Polyisocyanats zu den NCO-reaktiven OH-Gruppen des hydroxylgruppenhaltigen Siloxans der Formel (I) 1 : 0,001 bis 1 : 0,4 beträgt.

7. Verfahren gemäß einem der Ansprüche 1 bis 6, **dadurch gekennzeichnet, dass** die noch freien NCO-Gruppen in Schritt C) blockiert werden.

8. Siloxangruppenhaltige Polyisocyanate erhältlich nach einem Verfahren gemäß einem der Ansprüche 1 bis 7.

9. Polyurethansysteme umfassend siloxangruppenhaltige Polyisocyanate gemäß Anspruch 9 8.

10. Polyurethansysteme gemäß Anspruch 9, **dadurch gekennzeichnet, dass** diese zur Vernetzung Polyhydroxy- und/oder Polyaminverbindungen sowie gegebenenfalls Hilfs- und Zusatzstoffe enthalten.

11. Polyurethanklebstoffe, Polyurethanlacke und Polyurethanbeschichtungen erhältlich unter Verwendung von siloxangruppenhaltigen Polyisocyanaten gemäß Anspruch 8.

## Claims

1. Process for preparing siloxane-modified polyisocyanates, wherein
A) polyisocyanates are reacted with
B) hydroxyl-containing siloxanes having number-average molecular weights of 200 to 3000 g/mol and an average OH functionality of greater than or equal to 1.8, of formula (I) 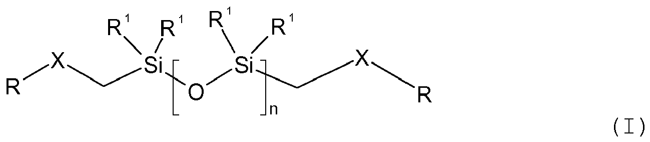
X is an aliphatic, unbranched or branched C₁ to C₂₀ radical optionally containing ether groups,
R is hydroxyl-functional radical,
R¹ is hydrogen or an optionally heteroatom-containing C₁ to C₂₀ hydrocarbon radical and
n is 1 to 40 and
C) if desired, blocking agents and the reaction of A) with B) is carried out in the absence of compounds having two or more hydroxyl groups, other than B).

2. Process according to Claim 1, **characterized in that** in A) polyisocyanates having uretdione, isocyanurate, allophanate, biuret, iminooxadiazinedione and/or oxadiazinetrione structures are used.

3. Process according to Claim 1 or 2, **characterized in that** in A) polyisocyanates based on IPDI, MDI, TDI, HDI or mixtures thereof are used.

4. Process according to any one of Claims 1 to 3, **characterized in that** in formula (I) R is a hydroxyl-functional carboxylic ester of the formula 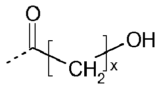 where x = is 3 to 5, preferably 5,
or a hydroxyalkyl-functional amino group of the formula 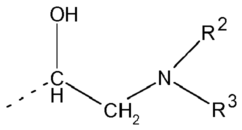 where
R² is an aliphatic linear, branched or cyclic hydroxyalkyl radical
R³ is hydrogen or corresponding to the definition of the radical R².

5. Process according to any one of Claims 1 to 4, **characterized in that** R¹ in formula (I) is a phenyl or methyl group.

6. Process according to any one of Claims 1 to 5, **characterized in that** the ratio of free NCO groups of the polyisocyanate to be modified to the NCO-reactive OH groups of the hydroxyl-containing siloxane of the formula (I) is 1:0.001 to 1:0.4.

7. Process according to any one of Claims 1 to 6, **characterized in that** the remaining free NCO groups are blocked in step C).

8. Polyisocyanates containing siloxane groups and obtainable by a process according to any one of Claims 1 to 7.

9. Polyurethane systems comprising polyisocyanates containing siloxane groups according to Claim 8.

10. Polyurethane systems according to Claim 9, **characterized in that** for crosslinking they comprise polyhydroxy and/or polyamine compounds and also, if desired, auxiliaries and additives.

11. Polyurethane adhesives, polyurethane coating materials and polyurethane coatings obtainable using polyisocyanates containing siloxane groups according to Claim 8.

## Revendications

1. Procédé pour la préparation de polyisocyanates modifiés par siloxane, dans lequel on transforme
A) des polyisocyanates avec
B) des siloxanes contenant des groupes hydroxyle, présentant des poids moléculaires numériques moyens de 200 à 3000 g/mole et une fonctionnalité OH moyenne supérieure ou égale à 1,8 selon la formule (I) 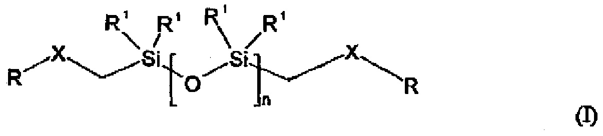
X représente un radical en C₁ à C₂₀ aliphatique, le cas échéant ramifié, contenant le cas échéant des groupes éther,
R représente un radical à fonctionnalité hydroxy,
R¹ représente hydrogène ou un radical hydrocarboné en C₁ à C₂₀ contenant le cas échéant des hétéroatomes et
n vaut 1 à 40 et
C) le cas échéant des agents de blocage et la transformation de A) avec B) est réalisée en l'absence de composés allant au-delà de B), comprenant 2 groupes hydroxyle ou plus.

2. Procédé selon la revendication 1, **caractérisé en ce qu'**on utilise, dans A), des polyisocyanates présentant des structures uretdione, isocyanurate, allophanate, biuret, iminooxadiazinedione et/ou oxadiazinetrione.

3. Procédé selon la revendication 1 ou 2, **caractérisé en ce qu'**on utilise, dans A), des polyisocyanates à base d'IPDI, de MDI, de TDI, de HDI ou de leurs mélanges.

4. Procédé selon l'une quelconque des revendications 1 à 3, **caractérisé en ce que** dans la formule (I), R représente un ester d'acide carboxylique à fonctionnalité hydroxy de formule 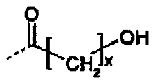 dans laquelle x = 3 à 5, de préférence 5,
ou un groupe amino à fonctionnalité hydroxyalkyle de formule 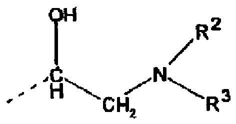 dans laquelle
R² représente un radical hydroxyalkyle aliphatique, linéaire, ramifié ou cyclique
R³ représente hydrogène ou correspond à la définition du radical R².

5. Procédé selon l'une quelconque des revendications 1 à 4, **caractérisé en ce que** R¹ dans la formule (I) représente un groupe phényle ou méthyle.

6. Procédé selon l'une quelconque des revendications 1 à 5, **caractérisé en ce que** le rapport des groupes NCO libres du polyisocyanate à modifier aux groupes OH réactifs par rapport à NCO du siloxane contenant des groupes hydroxyle de formule (I) vaut 1:0,001 à 1:0,4.

7. Procédé selon l'une quelconque des revendications 1 à 6, **caractérisé en ce que** les groupes NCO encore libres dans l'étape C) sont bloqués.

8. Polyisocyanates contenant des groupes siloxane pouvant être obtenus selon un procédé selon l'une quelconque des revendications 1 à 7.

9. Systèmes de polyuréthane comprenant des polyisocyanates contenant des groupes siloxane selon la revendication 8.

10. Systèmes de polyuréthane selon la revendication 9, **caractérisés en ce qu'**ils contiennent des composés polyhydroxy et/ou polyamine pour la réticulation ainsi que le cas échéant des adjuvants et des additifs.

11. Adhésifs de polyuréthane, laques de polyuréthane et revêtements de polyuréthane pouvant être obtenus par l'utilisation de polyisocyanates contenant des groupes siloxane selon la revendication 8.
